**Europäisches Patentamt**

**European Patent Office**

**Office européen des brevets**

(11) Publication number: **0 185 800**
**A1**

# EUROPEAN PATENT APPLICATION

(21) Application number: **84116443.7**

(22) Date of filing: **28.12.84**

(51) Int. Cl.⁴: **G 01 M 11/06**

(43) Date of publication of application:
**02.07.86** Bulletin **86/27**

(84) Designated Contracting States:
**BE CH DE FR GB IT LI NL SE**

(71) Applicant: **Anzen Motor Car Co., Ltd.**
**1-6-2 Moto-Akasaka**
**Minato-ku Tokyo(JP)**

(72) Inventor: **Ninoseki, Juetsu**
**5-36-7, Kugayama**
**Suginami-ku Tokyo(JP)**

(72) Inventor: **Sakamoto, Masaichi**
**2-3-1, Funahori**
**Edogawa-ku Tokyo(JP)**

(72) Inventor: **Minagawa, Koji**
**361-31, Chigusa-cho**
**Chiba-shi Chiba-ken(JP)**

(74) Representative: **Blumbach Weser Bergen Kramer**
**Zwirner Hoffmann Patentanwälte**
**Radeckestrasse 43**
**D-8000 München 60(DE)**

(54) Apparatus for determining the irradiation direction of a headlight beam.

(57) An apparatus for determining the projecting direction of a light beam which is projected from an automobile headlight (9) in a lower beam mode is provided. The present apparatus is characterized in using a pair of photoelectric sensors connected in series in opposite directions thereby allowing to supply a differential output signal. The apparatus also includes a detector (6a, b, c) connected to the pair of sensors for detecting the condition where a maximum of such a differential output signal is obtained, thereby determining the projecting direction of the light beam. That is, in the case where a cut line is defined in the light beam when projected in lower beam mode, the above-mentioned maximum condition is obtained when the projected light predominantly impinges on one of the pair of sensors. Thus, the apparatus must be so structured that a relative positional relation between the pair of sensors and the light beam may be changed thereby allowing the light beam to scan across the pair of sensors.

F i g. 1

## APPARATUS FOR DETERMINING THE IRRADIATION DIRECTION
## OF A HEADLIGHT BEAM

BACKGROUND OF THE INVENTION

1. Field of the Invention

The present invention relates to a system for measuring the direction of projection of a light beam emitted from a light source, such as a headlight of an automobile, and, in particular, to an apparatus for determining the projection direction of a light beam from a headlight of an automobile when set in a lower beam mode. More specifically, the present invention relates to an apparatus for determining as to whether a light beam from a headlight of an automobile is directed properly when set in a lower beam mode by detecting the position of a predetermined line, such as so-called cut line, defined in the projected light beam when projected on a screen.

2. Description of the Prior Art

As is well known, a headlight of a vehicle, such as an automobile, has typically tow modes of projection: upper and lower beam modes. When the headlight is set in upper beam mode, the light beam from the headlight is directed rather straight ahead thereby allowing the projected light beam to reach a relatively far ahead distance; on the other hand, when set in lower beam mode, the light beam is directed more at an angle thereby causing the light beam to irradiate relatively closer areas. It is desired and often times required to switch to the lower beam mode when there is a vehicle running in the opposite direction in the other lane of a road until it passes by so as not to interfere the visibility of the driver of that vehicle. Thus, it is important that the light beam projected from a headlight of a vehicle be directed properly when set in the lower beam mode mainly from the safety reason.

It is becoming increasingly popular to manufacture headlights for use in vehicles, such as automobiles, such that their light pattern when projected onto a screen placed upright in front in the lower beam mode has a predetermined critical line, including so-called "cut line", or unique pattern. In the case where the cut line is defined in the light beam when projected in the lower beam mode, the light is irradiated preferentially at one side of the cut line and not at the other side thereof. Use of such a cut line allows the light beam to irradiate a selected portion of the road which is necessary for safety driving of the vehicle from which the light beam is projected while preventing the light beam from getting into the eyes of the driver in those vehicles running in the opposite directions. Thus, when the light beam projected from a headlight of a vehicle has such a unique light pattern or critical line, it is then important that the irradiation direction of the light beam be determined with respect to such a unique pattern or critical line. It is to be noted that in the following description the term "cut line" will be mainly used as indicating a critical line, curved or straight, present in the projected light pattern of a light beam from a headlight.

SUMMARY OF THE INVENTION

It is therefore a primary object of the present invention to provide an apparatus for determining the irradiation direction of a light beam projected from a light source, such as a headlight of a vehicle.

Another object of the present invention is to provide an apparatus for determining the irradiation direction of a headlight beam of a vehicle when projected in lower beam mode.

A further object of the present invention is to provide an apparatus for determining the irradiation direction of a light beam from an automobile headlight by detecting the location of a predetermined critical line of the light beam when projected onto a screen standing upright in front.

A still further object of the present invention is to provide an apparatus for measuring the projecting direction or position of critical line of a light beam from a headlight of a vehicle, which is reliable in operation and simple in structure.

Other objects, advantages and novel features of the present invention will become apparent from the following detailed description of the invention when considered in conjunction with the accompanying drawings.

BRIEF DESCRIPTION OF THE DRAWINGS

Fig. 1 is a schematic illustration showing an apparatus for measuring the irradiation direction of a light beam from a headlight constructed in accordance with one embodiment of the present invention;

Fig. 2 is a schematic illustration showing on an enlarged scale the examining screen having thereon a plurality of photoelectric elements and provided in the apparatus of Fig. 1;

Fig. 3 is a circuit diagram showing a detector circuit including a pair of phtovoltaic cells connected in series in opposite directions, which may be advantageously applied to the examining screen of Fig. 2;

Fig. 4 is a circuit diagram showing another detector circuit including three pairs of photovoltaic cells, each pair of photovoltaic cells being connected in series in opposite directions, which may also be advantageously applied to the examining screen of Fig. 2;

- 4 -

Fig. 5 is a schematic illustration showing how the four photoelectric elements C-F provided on the examining screen shown in Fig. 2 are operatively associated;

Fig. 6 is a graph illustrating typical isophotic lines in the light pattern of a light beam projected from a headlight of a vehicle in upper beam mode onto a screen standing upright in front of the headlight;

Fig. 7 is a graph similar to Fig. 6 but when the light beam is projected in lower beam mode in the case where the headlight is so structured to provide a cut line including horizontal and oblique sections when set in lower beam mode;

Fig. 8 is a graph showing the relation between the differential current produced in the circuit of Fig. 3 and the center position between the paired sensor elements A and B, which is useful for explaining the principle in operation of the present invention;

Fig. 9 is a graph showing the photoelectric characteristic of the photoelectric elements mounted on the examining screen of Fig. 2, which is also useful for explaining the principle in operation of the present invention;

Fig. 10 is a schematic illustration showing an apparatus for automatically measuring the irradiation direction of a light beam projected from a headlight of a vehicle constructed in accordance with another embodiment of the present invention;

Fig. 11 is a schematic illustration in perspective showing in detail the main portion of the structure shown in Fig. 10;

Fig. 12 is a block diagram showing a control system for controlling the operation of the structure shown in Fig. 11; and

Fig. 13 is a graph showing an isophotic line of a projected light beam, which also defines an area having a light intensity greater than or equal to a predetermined level and often referred to as "hot zone".


DESCRIPTION OF THE PREFERRED EMBODIMENTS

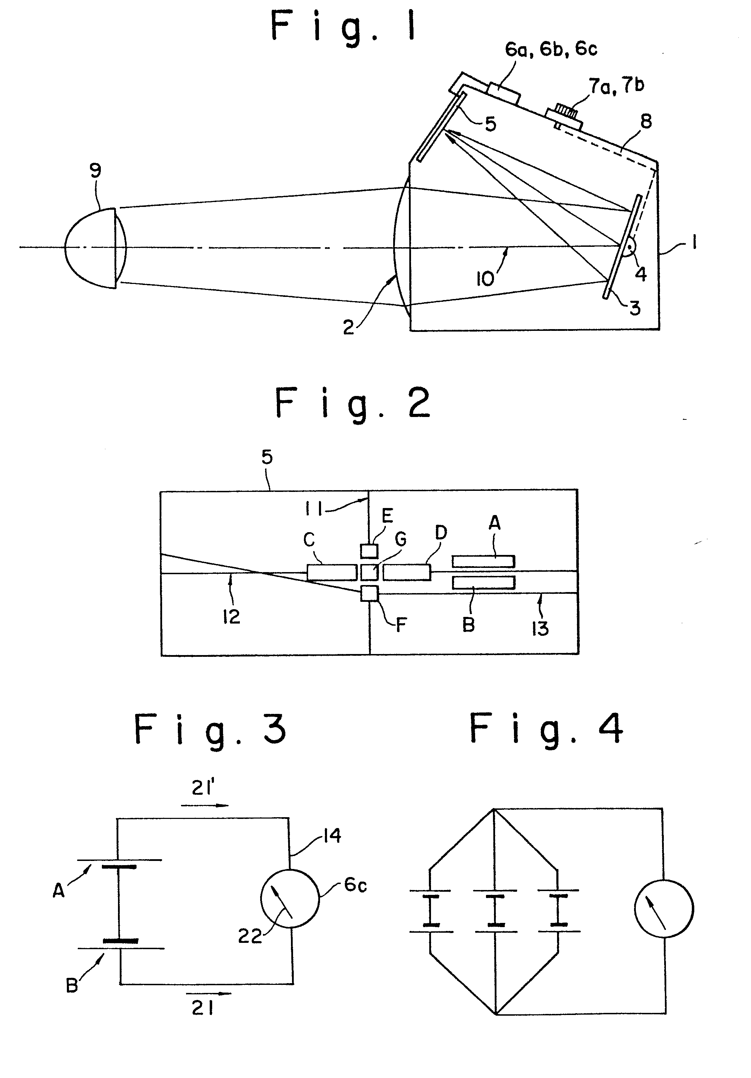

Referring now to Fig. 1, there is shown an apparatus for measuring the irradiation direction of a light beam emitted from a light source, such as a headlight 9 of an automobile. As shown, the apparatus includes a housing 1 defining a dark or light-shielded chamber generally in the form of a box and thus no external light is lead into the interior of the housing 1 excepting through a lens 2 which is fixedly mounted on the housing 1 as disposed opposite to the headlight 9 for leading the light beam emitted from the headlight 9 into the interior thereof. The lens 2 preferably has a diameter which is larger than that of the headlight 9 to be tested. Although not shown specifically, as is obvious for one skilled in the art, it should be understood that there is provided an appropriate supporting mechanism for supporting the housing 1 at a desired position above ground opposite to the headlight 9 to be tested. If the lens 2 is sufficiently large in diameter such that the headlight 9 to be tested may be always located within the horizontal upper and lower limits determined by the top and bottom of the lens 2 irrespective of the model of a vehicle, then the present apparatus, or its housing 1 may be provided fixed in space. It should however be noted that the present apparatus may also be so provided to be adjustable in vertical position as is obvious for one skilled in the art.

A reflecting mirror 3 is provided inside the housing 1 at a location to receive the light beam emitted from the headlight 9 after passing through the lens 2. The mirror 3 is pivotally mounted on the housing 1 at a ball joint 4 so that the mirror 3 may be pivottaly moved horizontally as well as vertically around the ball joint 4, which is located at an optical axis 10 of the lens 2. The ball joint 4 is operatively connected to a pair of dials 7a and 7b, which are rotatably mounted on and outside of the housing 1, through a mechanical driving power transmitting mechanism 8, which, for example, may be comprised of gears and chains. Thus, as an operator grabs to rotate one of the dials 7a and 7b, the mirror 3 is pivotally moved in the corresponding direction around the ball joint 4. That is, the mirror 3 may be pivotally moved around the ball joint 4 horizontally as well as vertically by manipulating the dials 7a and 7b.

An examining screen 5 is disposed generally above the lens 2 as fixedly mounted on the housing 1 in the illustrated embodiment. The screen 5 receives the light beam emitted from the headlight 9 after having been reflected by the mirror 3 and thus, although not shown specifically, there is formed a light pattern, which is typically elliptic in shape if the headlight 9 is in upper beam mode, on the screen 5. Thus, the operator may observe the light pattern formed on the screen 5 from the exterior of the apparatus. Although the structure shown in Fig. 1 is preferable in making the present apparatus compact in size by bending the optical path with the provision of the mirror 3, it should be understood that the provision of the mirror 3 is not by all means necessary. In other words, if desired, the mirror 3 may be discarded thereby having the screen 5 disposed along the straight optical axis 10 of and at the focal point of the lens 2. In this case, however, the screen 5 should be so provided to be operatively coupled to the dials 7a and 7b so as to be movable horizontally as well as vertically with respect to the optical axis 10 of the lens 2. Such an alternative structure will be described more in detail later.

Fig. 2 shows the detailed structure of the examining screen 5 mounted on the housing 1 as shown in Fig. 1. As shown, the screen 5 is generally rectangular in overall shape and there is defined a vertical reference line 11, which extends vertically passing through the center of the screen 5, and a horizontal reference line 12, which extends horizontally also passing through the center of the screen 5. In the illustrated embodiment, also provided in the screen 5 is a cut line 13 which is comprised of a horizontal line section located at a position below the horizontal reference line 12 and an oblique line section extending upwardly from the intersection between the horizontal line section and the vertical reference line 11.

At the intersection between the horizontal and vertical reference lines 11 and 12, which also defines the center of the screen 5, there is mounted a center photoelectric sensor or element G for detecting the approximate maximum level of illumination produced by the projected light beam. A pair of identically structured photoelectric sensors C and D are mounted on the screen 5 along the horizontal reference line 12 as being located

- 9 -

on opposite sides of the center sensor G equidistantly separated therefrom. Another pair of identically structured photoelectric sensors E and F are also mounted on the screen 5 along the vertical reference line 11 on opposite sides of the center sensor G as equidistantly separated therefrom. In addition, to the right of the sensor D, a still another pair of identically structured photoelectric sensors A and B are mounted on the screen 5 as arranged vertically on both sides of the horizontal reference line 12. These sensors A and B should be located equidistantly from the horizontal reference line 12, and, it is desirable to have these paired sensors A and B located as close as possible to each other and thus to the horizontal reference line 12. As shown, these paired sensors A and B are also preferably elongated in shape and arranged with their direction of elongation in parallel with horizontal reference line 12. Moreover, two or more pairs of such sensors A and B may be disposed along the horizontal reference line 12. As a further alternative structure, the paired sensors A and B may be disposed on both sides of the horizontal line section of the cut line 13 instead of the horizontal reference line 12. As a still further alternative, the paired sensors A and B may be provided on the screen 5 such that their mounting positions may be adjustably set.

Although the photoelectric sensors A-G may be comprised of any well known photoelectric elements, including photovoltaic cells and photoconductive elements, use will be made of photovolatic cells in the following description. Fig. 3 illustrates one example of a detector circuit for wiring the pair of sensors A and B, in which the photovoltaic cells A and B are connected in series in opposite directions, i.e., with their positive terminals connected together and their negative terminals connected together. A differential current meter 6c is also connected in the circuit and it indicates a difference in currents produced by the respective sensors A and B. That is, when light impinges on the respective sensors A and B, they produce currents 21' and 21 opposite in direction with the magnitude depending on the amount of light impinged thereon, and, a difference in these currents, or its algebraic sum, is indicated in the meter 6c. The meter 6c is fixedly mounted on top of the housing 1 as shown in Fig. 1 so that the operator may easily observe the position of a needle 22 to see whether there is a balance or imbalance between the currents 21' and 21 produced by the pair of sensors A and B, respectively.

Fig. 4 shows an alternative embodiment in which three pairs of such photovoltaic cell type sensors A and B are provided, wherein each paired sensors are connected in series in opposite directions and all of the three pairs are connected in parallel. All of these paired sensors connected in parallel are connected is series with the differential current meter, similarly with the previous embodiment. Such a structure is advantageous in obtaining an increased signal level.

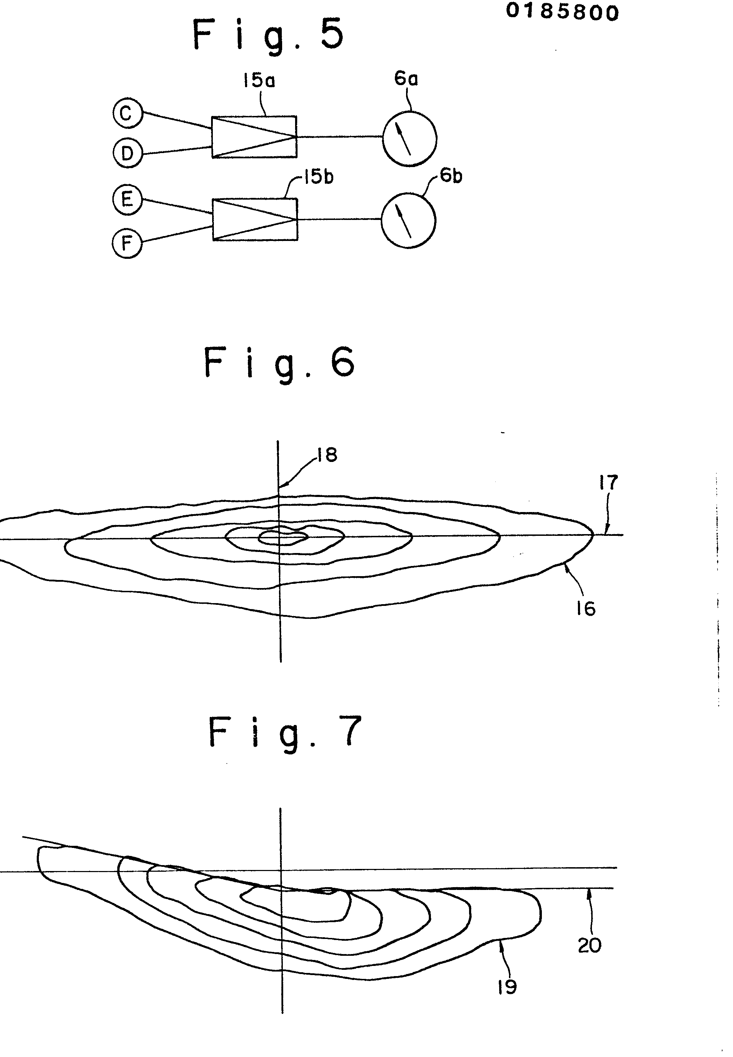

As shown in Fig. 5, the paired horizontal sensors C and D are electrically connected to a differential amplifier 15a which amplifies a difference between the photocurrents produced by the sensors C and D and the thus amplified differential photocurrent is supplied to a meter 6a. Similarly, the paired vertical sensors E and F are electrically connected to another differential amplifier 15b so that a difference between the photocurrents produced by the sensors E and F is suitably amplified and the amplified signal is supplied to another meter 6b. These meters 6a and 6b are also fixedly mounted on top of the housing 1 thereby allowing the operator to observe them with ease. It should be noted that these pairs of sensors C-D and E-F may be each connected in a circuit as shown in Fig. 3, if desired.

In operation, an automobile having headlights 9 to be tested is first driven into a predetermined site opposite to the present beam direction determining apparatus. In this case, the headlight 9 must be so located within upper and lower horizontal limits

- 12 -

determined by the top and bottom of the lens 2. Thus, if the headlight 2 is located outside of such a range even partially, the present apparatus, or housing 1, should be adjusted in position to satisfy the above-mentioned condition.

Then, the headlight 9 is turned on in upper beam mode and thus a light beam emitted from the headlight 9 becomes projected onto the screen 5 as passing through the lens 2 and being reflected by the mirror 3, thereby forming a light pattern 16 on the screen 5 as indicated by isophotic lines in Fig. 6. It is to be noted that, as indicated in Fig. 6, the isophotic lines are generally oval or elliptic when the headlight 9 is set in upper beam mode. Thus, the light intensity distribution is approximately symmetrical with respect to its horizonal center line 17 and also with respect to its vertical center line 18. These center lines 17 and 18 pass through the center of the projected light pattern, which typically corresponds to the approximate maximum light intensity point.

Accordingly, the projected light beam impinges on the respective photovoltaic type sensors A-G provided on the screen 5. And, each of the sensors A-G produces a photocurrent depending on the local luminosity, or amount of light impinged thereon. As described above, since the paired sensors C and D are connected to the meter 6a,

- 13 -

there will be indicated a difference between the photocurrents produced by these sensors C and D. Similarly, the difference in photocurrent between the other pair of sensors E and F may also be indicated at the meter 6b. The presence of such differences indicated in these meters 6a and 6b signifies that there is a discrepancy between the vertical and horizontal reference lines 11 and 12 of the screen 5 and the vertical and horizontal center lines 18 and 17 of the light beam 16 projected in upper beam mode.

Thus, the operator now grabs the dial 7a to have it turned clockwise or counterclockwise until the reading of the meter 6a becomes zero. That is, if the reading of the meter 6a is not zero, indicating the presence of a discrepancy between the vertical reference line 11 of the screen 5 and the vertical center line 18 of the projected light beam 16, the operator must turn the dial 7a appropriately to have the mirror 3 pivotted horizontally around the ball joint 4 thereby causing the light pattern projected on the screen 5 to move horizontally so as to bring the vertical center line 18 of the projected light pattern 16 in alignment with the vertical reference line 11 of the screen 5. Similarly, if the reading of the other meter 6b is also other than zero, since there is a discrepancy in position between the horizontal reference line 12 of the screen 5 and the horizontal center line 17 of the projected light pattern 16, the operator must turn the dial 7b appropriately until there is obtained zero reading at the meter 6b. In this manner, once zero reading is obtained in each of the meters 6a and 6b by manipulating the dials 7a and 7b, there is attained an alignment in position between the screen 5 and the projected light pattern 16. Under the condition, the center position of the projected light pattern 16 is indicated by the current readings at the dials 7a and 7b, and, since such center position coincides with the location of the center sensor G, an output from the sensor G indicates the approximate maximum level of illumination of the projected light beam 16.

Now, since an alignment is obtained between the projected light beam 16 and the screen 5, the headlight 9 is then switched to the lower beam mode. When so switched, on the screen 5 is obtained a light pattern 19 as indicated by isophotic lines in Fig. 7. In the illustrated example, there is defined a cut line 20 in the light pattern 19 produced when the headlight 9 is projected in lower beam model. And, since the cut line 20 has a straight line section located in the right bottom half quadrant somewhat below the horizontal reference line 12 and an oblique line section extending upwardly to the left from the left end of the horizontal

0185800

line section, the headlight 9 is to be used for automobiles running on the left lane of a road. It should however be noted that the present invention should not be limited to a particular shape of such cut line.

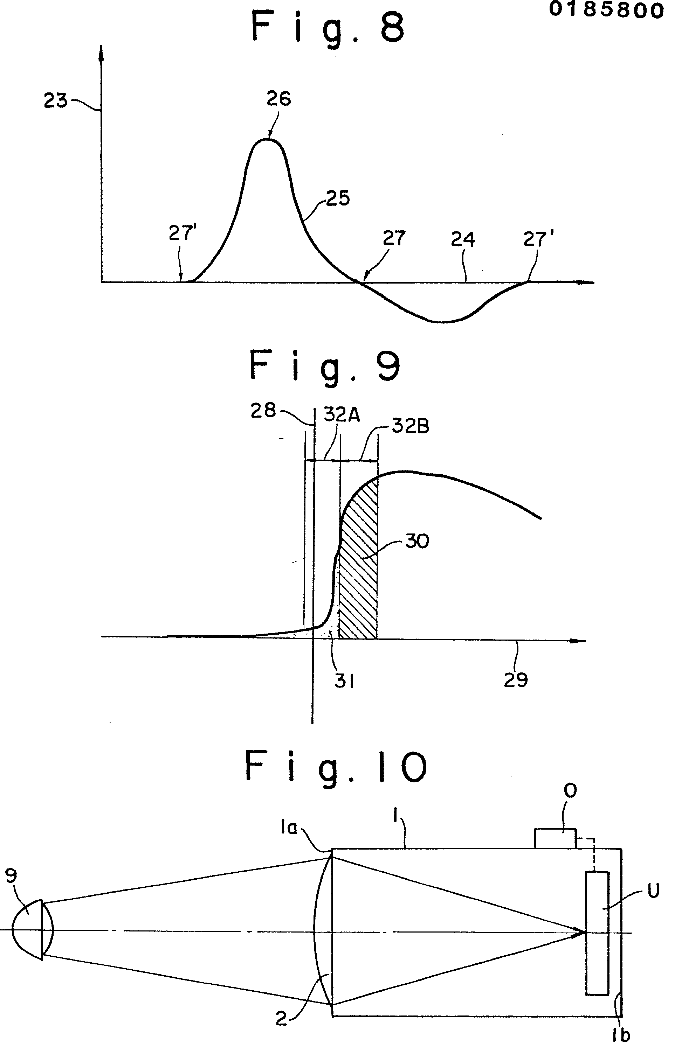

With the lower beam light pattern 19 present on the screen 5, the operator now manipulates the dial 7b again so as to move the light pattern 19 on the screen 5 along the vertical reference line 11 upward or downward. While so moving the projected lower beam light pattern 19 along the vertical reference line 11, there is a condition in which the light pattern 19 impinges on the sensor B but not on the sensor A thereby producing a maximum difference between the two current outputs, whereby the meter 6c indicates its maximum reading, and another condition in which the light pattern 19 impinges on both of the sensors A and B substantially equally thereby producing no difference in their current outputs, whereby the meter 6c indicates zero reading. In this manner, the reading at the meter 6c varies depending on the magnitude in difference between the current outputs from the paired sensors A and B as the light pattern 19 is moved along the vertical reference line 11, and such a variation in differential current with the relative position between the cut line 20 and the center of the paired sensors A and B is graphically indicated by a curve 25 in Fig. 8.

- 16 -

In the graph of Fig. 8, its ordinate 23 indicates a difference in current outputs produced from the paired sensors A and B and its abscissa 24 indicates the relative position between the cut line 20 and the paired sensors A and B. The characteristic curve 25 has its maximum point 26 which indicates the condition that the cut line 20 is located at the center between the paired sensors A and B so that the light pattern 19 impinges substantially on the lower sensor B but very little on the upper sensor A. Thus, the position of this maximum point 26 at the abscissa 24 indicates the position of cut line 20. The curve 25 decreases symmetrically from this maximum point 26 and finally reaches zero differential current points 27 and 27'. The zero point 27 indicates the condition in which the light pattern 19 impinges on both of the paired sensors A and B substantially equally; whereas, the zero point 27' indicates the condition in which the light pattern 19 does not impinge on either of the paired sensors A and B.

Fig. 9 indicates the distribution of illumination, which is indicated by the ordinate 28 in the graph of Fig. 9, of the lower beam light pattern 19 when measured along the vertical line which corresponds to the abscissa 29 in the graph of Fig. 9. As indicated, there is an abrupt change in the level of illumination across the cut line 20. Supposing that a region 32A

- 17 -

corresponds to the width of the sensor A and a region 32B corresponds to the width of the sensor B which is arranged side-by-side with the sensor A, an area denoted by 31 indicates the amount of light received by the upper sensor A and an area denoted by 30 indicates the amount of light received by the lower sensor B under the condition that the cut line 20 is located at the center between the two sensors A and B. It should thus be easily understood that the amount of light received by the lower sensor B is significantly larger than that received by the upper sensor A.

Thus, what is required for the operator to do is only to manipulate the dial 7b until a maximum reading is attained at the meter 6c which is connected to the pair of sensors A and B. Once such a maximum reading is attained, then the operator takes the current reading of the dial 7b. Then, by comparing the reading of the dial 7b when the upper beam light pattern 16 has been aligned with the screen 5 with the current reading of the dial with a maximum reading at the meter 6c, the operator can determine the position of the cut line 20 or the projected direction of a light beam emitted from the headlight 9 in lower beam mode.

Referring now to Fig. 10, there is shown an apparatus for determining the projecting direction of a light beam constructed in accordance with another

- 18 -

embodiment of the present invention. As shown, in the present embodiment, the apparatus includes the housing 1 which is generally in the shape of a box defining a dark chamber and provided with the lens 2 at its front wall 1a for leading the light beam emitted from the headlight 9 into the interior of the housing 1. As different from the previous embodiment shown in Fig. 1, no reflecting mirror is provided in this embodiment, instead a measuring unit U is disposed inside of the housing 1 at its rear wall 1b as opposite to the lens 2. Thus, the light beam passing through the lens 2 directly impinges on the measuring unit U, the detailed structure of which will be described later. Also provided is an operating unit O, including switches and display devices, as mounted on top of the housing 1. The operating unit O is operatively connected to the measuring u..it U.

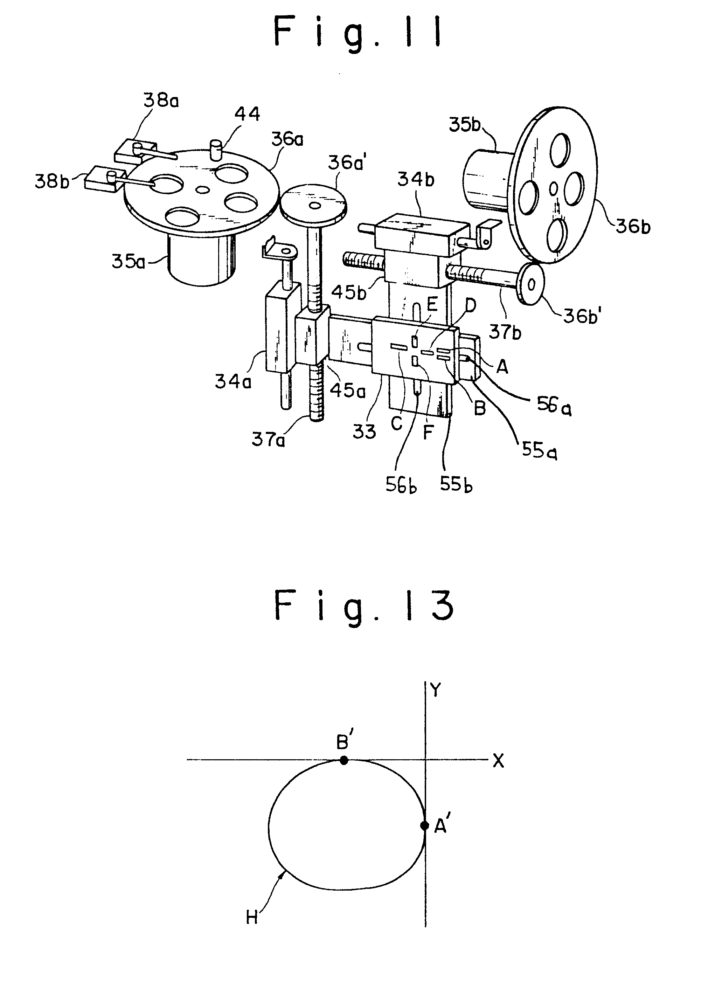

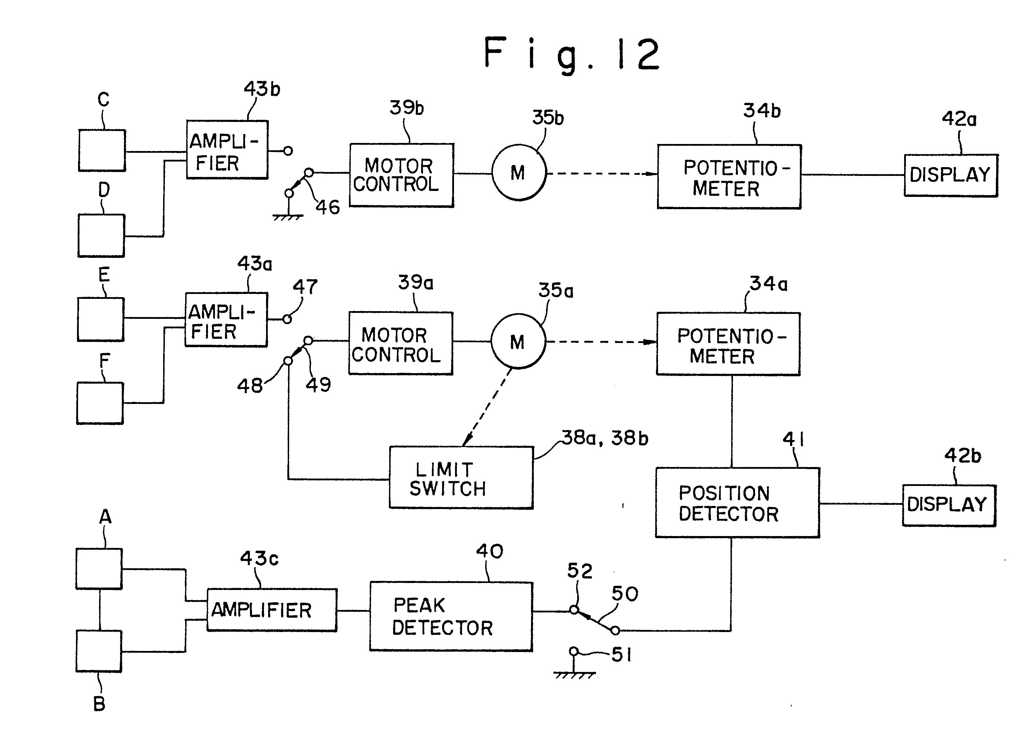

As different from the previous embodiment, in accordance with the present embodiment, the irradiation direction of a light beam emitted from a headlight to be tested is determined automatically. A mechanical aspect of the structure of the measuring unit U is shown in Fig. 11. As shown, the measuring unit U includes an examining screen 33 which is supported to be movable in a plane which is perpendicular to the optical axis of the lens 2. The screen 33 of the present embodiment is structurally similar to the screen 5 of the previous embodiment. It

- 19 -

is to be noted, however, that the screen 33 may have a different structure. Thus, the screen has mounted thereon four photovoltaic cell type sensors C-F for alignment between a light beam of upper beam mode and the screen 33 and two photovoltaic cell type sensors A and B for detecting a predetermined critical line, such as cut line, of the light beam.

Also provided in the measuring unit U is a servo-motor 35a having a driving shaft on which a driving gear wheel 36a is fixedly mounted. Four through-holes are provided in the gear wheel 36a to make it light in weight and a pin 44 is provided as partly planted in the periphery of the gear wheel 36a and projecting upward. A pair of limit switches 38a and 38b are provided fixed in space, for example, as fixedly mounted on the housing 1 as spaced apart over a predetermined distance so as to be engageable with the pin 44. As will be described more in detail later, the servo-motor 35a changes its direction of rotation as the pin 44 comes into engagement with one of the limit switches 38a and 38b so that, when actuated, the gear wheel 36a is driven to rotate clockwise and counterclockwise alternately at a predetermined period.

A driven gear wheel 36a' is provided to be in mesh with the driving gear wheel 36a so that the gear wheel 36a' is driven to rotate by the gear wheel 36a when the servo-motor 35a is activated. The gear wheel 36a' is

- 20 -

fixedly mounted at the top end of a vertical feed rod 37a having a threaded portion, thereby serving as a feed screw, and, thus, the vertical feed rod 37a and the gear wheel 36a' are set in rotation in unison. Provided as threaded onto the threaded portion of the vertical feed rod 37a is a sliding contact 45a which cooperates with a potentiometer 34a which is disposed as fixedly mounted on the housing and extending in parallel with the vertical feed rod 37a. Thus, the sliding contact will move relative to the potentiometer 34a along its longitudinal direction as the vertical feed rod 37a is driven to rotate. As is well known in the art, the potentiometer 34a produces an electrical signal indicating the vertical position of the sliding contact 45a with respect thereto. Also provided as fixedly mounted on the sliding contact 45a and extending horizontally is a horizontal supporting member 55a which is generally rectangular and elongated in shape and provided with a horizontally running slot at its center. Although not shown specifically, it should be obvious for one skilled in the art that the screen 33 is provided with an engaging means as fixedly mounted at its rear surface and the engaging means is in engagement with the horizontal running slot 56a thereby allowing the screen 33 to slidingly move along the slot 56a with respect to the supporting member 55a.

The measuring unit U also includes another servo-motor 35b having a driving shaft on which another driving gear wheel 36b is fixedly mounted. Provided in mesh with the driving gear wheel is a driven gear wheel 36b' which is fixedly mounted at one end of a horizontal feed rod 37b having a threaded portion at least a part thereof. A sliding contact 45b which cooperates with another potentiometer 34b, which is also fixedly mounted on the housing 1, is threadingly mounted on the horizontal feed rod 36b' so that the sliding contact moves horizontally relative to the stationary potentiometer 34b as the rod 37b is driven to rotate. Further, a vertical supporting member 55b is provided with its one end fixedly attached to the sliding contact 45b and a vertically running slot 56b is engraved in the vertical supporting member 55b at its center. It should be noted that the engaging means provided at the rear surface of the screen 33 is also in engagement with this vertically running slot 56b so that the screen 33 can move vertically as guided along the slot 56b when the sliding contact 45a is caused to move upward or downward.

It should thus be understood that the screen 33 may be moved in a horizontal plane determined by the surface of the screen 33 in any desired direction by activating the servo-motors 35a and 35b and the position of the screen 33 may be detected by the potentiometers 34a and 34b.

Now, an electrical aspect of the structure of the measuring unit U and its association with the operating unit O is schematically illustrated in Fig. 12. It is to be noted that in Fig. 12 electrical connections are indicated by solid lines and mechanical connections are indicated by dotted lines. As shown, provided as electrically connected to the horizontally arranged sensors C and D is an amplifier 43b which functions to amplify a difference between current outputs supplied from the sensors C and D and which may be selectively connected to a motor control 39b through a switch 46. The motor control 39b is connected to the servo-motor 35b (Fig. 11) and is so structured to continue to supply a driving signal to the servo-motor 35b until the differential signal from the amplifier 43b becomes zero. As the servo-motor 35b is driven to rotate, the screen 33 is caused to move horizontally and the position of the screen 33 is detected by the potentiometer 34b which supplies a position signal to a horizontal position display device 42a.

On the other hand, the vertically arranged sensors E and F are connected to another amplifier 43a which also functions to amplify a difference between current outputs from the sensors E and F and supplies its

- 23 -

output to a first contact 47 of a switch 49, which is always connected to a motor control 39a and which may be operated to selectively establish connection with either one of first and second contacts 47 and 48. The motor control 39a is similar in structure to the motor control 39b and thus it supplies a driving signal to the other servo-motor 35a (Fig. 11) until the differential signal from the amplifier 43a becomes zero when the switch 49 is switched to the contact 47. As the servo-motor 35a is driven to rotate, the screen 33 is caused to move vertically and its vertical position is detected by the potentiometer 34a which supplies a vertical position signal to be supplied to a vertical position display device 42b. As will become clear later, in this case, it is assumed that a switch 50 connected to the position detector 41 is switched to a ground contact 51.

If the switch 49 is switched to the second contact 48 thereby establishing connection between the motor control 39a and the pair of limit switches 38a and 38b (Fig. 11), then the servo-motor 35a is so controlled that its direction of rotation is reversed each time when the pin 44 comes into contact with the limit switches 38a and 38b. In this case, the servo-motor 35a is driven to rotate clockwise and counterclockwise alternately at a predetermined frequency so that the screen 33 is caused to move up and down in a reciprocating manner as guided by the vertically running slot 56b

The critical line detecting sensors A and B are connected in series and opposite in directions as described previously and they are connected to an amplifier 43c, which is connected to a well-known peak detector 40. Thus, the peak detector 40 detects a peak in the amplified differential signal supplied from the amplifier 43c, for example the peak 26 in the waveform 25 of Fig. 8, and upon detection of such a peak it supplies a hold signal to its output terminal 52, which also defines one of the contacts for the switch 50. Thus, under the condition that the switch 49 is switched to the contact 48 and the switch 50 is switched to the contact 52, the position detector 41 receives a vertical position signal indicating the current vertical position of the screen 33 from the potentiometer 34a and a hold signal from the peak detector 40 so that the position detector 41 detects the vertical position of the screen 33 at the time when the differential current output from the amplifier 43c is at maximum and supplies the thus detected position signal to the vertical position display device 42b.

In operation, an automobile having a headlight 9 to be tested is driven into a predetermined site with its front opposite to the present measuring apparatus.

As described with respect to the previous embodiment, the apparatus of Fig. 10 may be mounted on a suitable supporting mechanism so as to adjustably set its position; on the other hand, if use is made of the lens 2 having a sufficiently large diameter, the apparatus may be provided fixed in space. With the headlight 9 to be tested being located opposite to the lens 2 of the present apparatus, the switch 46 is operated to establish connection between the amplifier 43b and the motor control 39b and the switch 49 is switched to the contact 47 with the remaining switch 50 being switched to the ground contact 51.

Under the circumstances, the headlight 9 is turned on in upper beam mode so that a light beam is emitted from the headlight 9 and projected onto the screen 33 in the measuring unit U after passing through the lens 2. Thus, the light beam in upper beam mode, whose light pattern is generally elliptic and symmetric with respect to its horizontal and vertical center lines when projected on a plane perpendicular to the projecting direction of the beam as mentioned previously, impinges on the aligning sensors C-F on the screen 33. Thus, differential current outputs are supplied to the amplifiers 43b and 43a from paired sensors C-D and E-F, respectively, which are then supplied to the respective motor controls 39b and 39a. As described above, driving signals are applied to the servo-motors 35b and 35a to have them driven to rotate so as to make the differential outputs approach zero. Therefore, the screen 33 is moved horizontally as well as vertically until there is attained a balance in the amount of light received by the paired sensors C and D and also by the other paired sensors E and F. Thus, once such a balance between the sensors C and D and between E and F has been attained, the screen 33 is located in alignment with the light beam of upper beam mode. That is, the vertical and horizontal reference lines 11 and 12 of the screen 33 are aligned with the vertical and horizontal center lines of the light beam of upper beam mode, respectively. Once such alignment is attained, no signal is supplied to drive the servo-motors 35a and 35b. On the other hand, the potentiometers 34a and 34b detect the current horizontal and vertical positions of the screen 33, which are then indicated on the position display devices 42a and 42b.

Then, the switch 46 is switched to its ground contact, thereby establishing disconnection between the amplifier 43b and the motor control 39b, and the switch 49 is switched to the contact 48 with the remaining switch 50 being also switched to the contact 52 It is to be noted that a mode switch may be provided in the operating unit O so as to operate the switches 46, 49 and 50 at the same time. Under the condition, the headlight 9 is switched to a lower beam mode. Since the switch 49 has been switched to the contact 48, there is formed an operating loop including the motor control 39a, motor 35a and limit switches 38a and 38b so that the the motor 35a is driven to rotate clockwise and counterclockwise alternately at a predetermined frequency, which thus causes the screen 33 to move in a reciprocating manner vertically. While the screen 33 executes such a vertical reciprocating motion, the paired sensors A and B scan the light beam of lower beam mode projected on the screen 33. Accordingly, the peak detector 40 detects a peak in the differential current output from the paired sensors A and B and upon detection of such a peak it supplies a hold signal to the position detector 41. When the position detector 41 has received the hold signal, it detects the current vertical position signal supplied from the vertical position potentiometer 34a and supplies the position signal to the display device 42b. Thus, the information displayed at the display device 42b indicates the position of a critical line, such as cut line, in the projected light beam. In this manner, the projecting direction or angle of a light beam projected from the headlight 9 may be suitably determined.

As described above, in accordance with the present invention, the position of a critical line, such as cut line, defined in a light beam projected from a

0185800

light source, such as an automobile headlight, or the projecting direction or angle of such a projected light beam can be determined extremely at high accuracy and with ease. It is to be noted that the previously mentioned reference lines are not necessarily provided on the screen physically and they may be set imaginary, for example, with the use of suitable electrical circuits. Furthermore, the present invention should not be limited to be used with headlights for use in automobiles for running on the left lane of a road but it may be equally applicable to headlights for use in automobiles built to run on the right lane of a road. Besides, the present invention should not be limited only to the detection of a cut line, but it may be applied to detect any critical portion of a light pattern projected on a screen so as to determine the projecting direction or angle of a light beam projected from a light source. For example, as shown in Fig. 13, the present invention may be also used to detect a periphery H of a light beam projected onto a screen. In this case, if the shape of such beam periphery H is known in advance, e.g., elliptic, circular, or the like, it may be necessary only to detect two positions A' and B' of such light periphery H in order to determine the projecting direction or angel of a light beam. The area defined by such beam periphery H is often called "hot zone." That is, the beam periphery H

0185800

is the portion where the light intensity or the level of illumination changes abruptly.

It should further be noted that in the embodiments described above the paired sensors A and B for detecting a predetermined critical portion of a projected light beam are disposed side-by-side with respect to a horizontal reference line; however, these sensors A and B may be disposed in any desired manner depending on the location or orientation of such a critical portion to be detected. For example, if it is desired to detect two separate critical portions A' and B' of beam periphery H in Fig. 13, a first pair of such sensors A and B may be provided as arranged horizontally and a second pair of such sensors A and B may be provided as arranged vertically, or alternatively only a pair of such sensors A and B are provided so as to be adjustable in orientation. Besides, additional pairs of such sensors A and B may also be provided along the oblique line section of the cut line 13.

While the above provides a full and complete disclosure of the preferred embodiments of the present invention, various modifications, alternate constructions and equivalents may be employed without departing from the true spirit and scope of the invention. Therefore, the above description and illustration should not be

- 30 -

0185800

construed as limiting the scope of the invention, which is defined by the appended claims.

- 31 -

0185800

WHAT IS CLAIMED IS:

1. Apparatus for determining the projecting direction of a light beam emitted from a light source having first and second light beam projection modes, which may be set selectively, comprising:

a first pair of photoelectric sensors arranged side-by-side for receiving said light beam and connected in series in opposite directions thereby producing a differential output signal between outputs from said first pair of sensors;

aligning means for aligning said light beam when projected in said first projection mode with said first pair of photoelectric sensors;

relative position changing means for changing a relative positional relation between said first pair of sensors and said light beam; and

detecting means connected to said first pair of sensors for detecting a maximum point of said differential output signal while changing the relative positional relation between said first pair of sensors and said light beam by said relative position changing means with said light beam being emitted from said light source in said second projection mode, thereby determining the projection direction of said light beam when projected in said second projection mode based on said maximum point thus detected.

- 32 -

2. The apparatus of Claim 1 wherein said light source is a headlight of a vehicle and said first projection mode is a upper beam mode, in which said light beam is directed relatively far ahead of said vehicle, and said second projection mode is a lower beam mode, in which said light beam is directed relatively closer to said vehicle.

3. The apparatus of Claim 2 further comprising a housing generally in the form of a box, thereby defining a dark chamber; supporting means for supporting thereon said first pair of sensors and said aligning means; and focusing means fixedly mounted on said housing opposite to said light source for leading said light beam emitted from said light source into the interior of said housing and onto that side of said supporting means on which said first pair of sensors and said aligning means are supported.

4. The apparatus of Claim 3 wherein said focusing means includes a lens fixedly mounted on said housing.

5. The apparatus of Claim 2 wherein said aligning means includes a second pair of photoelectric sensors arranged along a horizontal reference line defined on said supporting means and symmetrically with respect to a horizontal reference line also defined on said supporting means and a third pair of photoelectric sensors arranged along said vertical reference line and symmetrically with respect to said horizontal reference line.

6. The apparatus of Claim 5 wherein said supporting means is fixedly mounted on said housing, and said relative position changing means includes a movable mirror, which is mounted on said housing pivotally movably, for reflecting said light beam passing through said focusing means onto said supporting means; first moving means for moving said mirror in a first direction; and second moving means for moving said mirror in a second direction which is perpendicular to said first direction, whereby said light beam is scanned across the surface of said supporting means by said first and second moving means.

7. The apparatus of Claim 6 wherein said first and second moving means includes first and second manually operable dials mounted on said housing.

8. The apparatus of Claim 6 wherein said detecting means includes a first meter connected in series with said first pair of sensors and fixedly mounted on said housing.

9. The apparatus of Claim 8 further comprising a second meter fixedly mounted on said housing as operatively connected to said second pair of sensors and a third meter fixeldy mounted on said housing as operatively connected to said third pair of sensors.

10. Apparatus for automatically determining the projecting direction of a light beam emitted from a light source having first and second light beam projection modes, which may be set selectively, comprising:

a first pair of photoelectric sensors arranged side-by-side and connected in series in opposite directions thereby producing a differential output signal between outputs from said first pair of sensors;

supporting means for supporting thereon said first pair of sensors;

aligning means also supported on said supporting means for aligning said light beam with said aligning means;

moving means for moving said supporting means in a plane generally perpendicular to the projecting direction of said light beam;

detecting means connected to said first pair of sensors for detecting a maximum point of said differential output signal; and

- 35 -

control means for controlling the operation of said moving means such that, while said light source projects said light beam in said first projection mode, said moving means moves said supporting means in said plane until alignment is obtained between said light beam projected in said first projection mode and said aligning means; whereas, while said light source projects said light beam in said second projection mode, said moving means moves said supporting means in a predetermined direction in said plane to cause said detecting means detect said maximum point thereby determining the projection direction of said light beam projected in said second projection mode.

11. The apparatus of Claim 10 wherein said supporting means includes a screen, on which said first pair of sensors are mounted, and said aligning means includes a second pair of photoelectric sensors mounted on said screen along a first reference line defined on said screen and a third pair of photoelectric sensors mounted on said screen along a second reference line defined on said screen as being perpendicular to said first reference line.

12. The apparatus of Claim 11 wherein said moving means includes first moving means for moving said screen along

- 36 -

a first direction defined in said plane and second moving means for moving said screen along a second direction which is perpendicular to said first direction.

13.  The apparatus of Claim 12 further comprising first position detecting means for detecting the position of said screen along said first direction and second position detecting means for detecting the position of said screen along said second direction.

14.  The apparatus of Claim 13 wherein said first direction is a horizontal direction and said second direction is a vertical direction.

15.  The apparatus of Claim 14 further comprising display means for displaying the position of said screen.

16.  The apparatus of Claim 10 wherein said light source is an automobile headlight, and said first projection mode is a upper beam mode and said second projection mode is a lower beam mode.

# Fig. 1

# Fig. 2

# Fig. 3

# Fig. 4

# Fig. 5

15a

C
D

6a

15b

E
F

6b

# Fig. 6

18

17

16

# Fig. 7

20

19

# Fig. 8

# Fig. 9

# Fig. 10

# Fig. 11

# Fig. 13

# Fig. 12

0185800

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-A-2 231 227 (R. BOSCH GMBH)<br>* pages 9, 10 *<br><br>--- | 1,2 | G 01 M 11/06 |
| A | PATENT ABSTRACTS OF JAPAN, vol. 6, no. 183 (P-143))[1061], 18th September 1982; & JP - A - 57 96238 (KOITO SEISAKUSHO K.K.) 15-06-1982<br>* page 177, figures 4, 5, page 178, figure 12 *<br><br>--- | 1 | |
| A | US-A-4 134 680 (L. HUNTER et al.)<br>* figures 7, 9, claim 1 *<br><br>--- | 2-5 | |
| A | DE-A-2 149 870 (DURA CORP.)<br>* figures 1, 3, page 8 below *<br><br>--- | 2,4,5 | TECHNICAL FIELDS SEARCHED (Int. Cl.4) |
| A | PATENT ABSTRACTS OF JAPAN, vol. 6, no. 262 (P-164)[1140], 21st December 1982; & JP - A - 57 156 531 (TOYOTA JIDOSHA KOGYO K.K.) 27-09-1982<br><br>--- | 10 | G 01 M 11/06 |
| A | PATENT ABSTRACTS OF JAPAN, vol. 6, no. 206 (P-149)[1084], 19th October 1982; & JP - A - 57 113 343 (KOITO SEISAKUSHO K.K.) 14-07-1982<br><br>----- | | |

The present search report has been drawn up for all claims

| Place of search | Date of completion of the search | Examiner |
|---|---|---|
| BERLIN | 11-09-1985 | FUCHS R |